# EUROPÄISCHE PATENTSCHRIFT

(11) **EP 1 049 611 B1**
(45) Veröffentlichungstag und Bekanntmachung des Hinweises auf die Patenterteilung: **07.08.2002**
(21) Anmeldenummer: 99910162.9
(22) Anmeldetag: 29.01.1999
(51) Int. Cl.: B60T 8/00, B60T 13/74, B60T 7/08

(54) **KRAFTFAHRZEUGBREMSSYSTEM MIT EINER ELEKTRISCH STEUERBAREN FESTSTELLBREMSANLAGE**
MOTOR VEHICLE BRAKE SYSTEM WITH ELECTRICALLY CONTROLLABLE PARKING BRAKE UNIT
SYSTEME DE FREINAGE DE VEHICULE AUTOMOBILE COMPORTANT UN DISPOSITIF A FREIN DE STATIONNEMENT POUVANT ETRE COMMANDE ELECTRIQUEMENT

(30) Priorität: 31.01.1998 DE 19803823; 18.06.1998 DE 19827063
(43) Veröffentlichungstag der Anmeldung: 08.11.2000
(73) Patentinhaber: Continental Teves AG & Co. oHG, 60488 Frankfurt (DE)
(72) Erfinder: ECKERT, Alfred, D-55129 Mainz-Hechtsheim (DE); DRUMM, Stefan, A., D-55291 Saulheim (DE); DIEBOLD, Jürgen, D-65760 Eschborn (DE)
(86) Internationale Anmeldenummer: EP9900571
(87) Internationale Veröffentlichungsnummer: WO9938738

(56) Entgegenhaltungen:
- DE-A- 4 004 149
- DE-A- 19 516 639
- DE-A- 19 611 360
- DE-A- 19 620 344

## Beschreibung

Die Erfindung betrifft ein Kraftfahrzeugbremssystem mit einer elektrisch steuerbaren Feststellbremsanlage sowie einer Betriebsbremsanlage, die eine dosierbare bzw. regelbare aktive Betriebsbremsvorrichtung aufweist, welche zum Fremdbremsdruckaufbau an den Radbremsen geeignet ist. Dabei umfaßt die Feststellbremsanlage alle Komponenten die zur Umsetzung der Feststellbremsfunktion erforderlich sind und die Betriebsbremsanlage umfaßt alle Komponenten, die zur Umsetzung der Betriebsbremsfunktion notwendig sind. Beide Bremsanlagen sind in das Gesamtbremssystem integriert.

Kraftfahrzeugbremssysteme haben allgemein im wesentlichen drei Funktionen (Betriebs-, Feststell- und Hilfs-/Notbremsfunktion) zu erfüllen. Dazu weisen die bekannten Bremssysteme in der Regel zwei voneinander unabhängige Bremsanlagen (Betriebsbrems- und Feststellbremsanlage) auf. Hierbei wird kein Informations- bzw. Datenaustausch zwischen den einzelnen Bremsanlagen ermöglicht und es besteht insbesondere die Schwierigkeit, bei Ausfall einer der Bremsanlagen die geforderte Hilfs-Notbremsfunktion durch die andere Bremsanlage koordiniert zu gewährleisten.

So wird in der DE 40 04 149 A1 beispielsweise vorgeschlagen, die in die Betriebsbremsanlage integrierte ABS-Regeleinrichtung zu nutzen, um im Stillstand des Fahrzeuges die für die Feststellbremsfunktion erforderliche Betätigungskraft zu verstärken. Dies ist insbesondere wünschenswert bei herkömmlichen Feststellbremsanlagen, bei denen mittels eines Handbremshebels sowie eines sich daran anschließenden Seilzuges die Betätigungskraft rein mechanisch auf die Radbremse übertragen wird. Ein derartiges Kraftfahrzeugbremssystem ist zunächst nur für herkömmliche Feststellbremsanlagen sinnvoll und weist insbesondere im Hinblick auf zukünftige Fahrerassistenzsysteme (z.B. automatische Feststellbremse, Anfahr- und Rangierhilfe) einen noch unzureichenden Bedienkomfort auf. Weiterhin ist die Gewährleistung einer ausreichenden Bremsfunktion im Fehlerfall innerhalb des Gesamtbremssystems nur unzureichend berücksichtigt.

Gemäß der DE 195 16 639 A1 ist außerdem ein Kraftfahrzeug mit einer Betriebs- und einer Feststellbremsanlage die den Oberbegrif des Anspruchs 1 offenbart, bekannt. Dabei wird im Fahrzeugstillstand die übliche Betätigungseinrichtung der Feststellbremsanlage für das Einleiten und Halten der Feststellkraft genutzt. Während der Fahrt, d.h. im Fall einer Notbremsung mittels der Feststellbremsanlage, wird auf eine Kombination aus Ansteuerungseinrichtung und Druckerzeuger bzw. Fremdkraftquelle der Betriebsbremsanlage zurückgegriffen. Als ein derartiger Druckerzeuger kann beispielsweise eine aktive Fremdkraftquelle (z.B. ASR-Pumpe) der Betriebsbremsanlage verwendet werden, wodurch sich Vorteile hinsichtlich des Kosten-, Gewichts- und Platzaufwandes ergeben. Als nachteilig bei einer solchen Anordnung des Kraftfahrzeugbremssystems erweist sich der durch Entkoppelung der Einzelfunktionen bedingte unzureichende Datenaustausch zwischen Feststell- und Betriebsbremsanlage. Insofern wird auch die Eignung eines solchen Kraftfahrzeugbremssystems für zukünftige Fahrerassistenzfunktionen, welche insbesondere mittels elektrisch steuerbarer Feststellbremsanlagen umgesetzt werden, als nachteilig empfunden.

Ausgehend davon besteht die Aufgabe der Erfindung darin, die Nachteile des Standes der Technik durch Vernetzung von Feststell- und Betriebsbremsanlage zu vermeiden und eine solche Vernetzung derart zu gestalten, daß die Ansteuerung geeigneter Komponenten zum Bremskraftaufbau sowie zum Halten der Bremskraft fahrsituationsabhängig erfolgen kann.

Gelöst wird die Aufgabe durch die Merkmalskombination des Patentanspruchs 1. Danach besitzt das Kraftfahrzeugbremssystem sowohl eine elektrisch steuerbare Feststellbremsanlage wie auch eine Betriebsbremsanlage, die eine dosierbare bzw. regelbare aktive Betriebsbremsvorrichtung aufweist, welche zum Fremdbremsdruckaufbau an zumindest einer der Radbremsen geeignet ist. Eine derartige aktive Betriebsbremsvorrichtung kann beispielsweise als über eine hydraulische Reglereinheit HCU gesteuerte hydraulische Pumpe einer Antriebsschlupfregeleinheit (ASR) oder eines elektronischen Stabilitätsprogramm-Modules (ESP), als analoger bzw. aktiver Booster oder als Fremdkraftquelle einer Brake-by-wire-Anlage etc. gestaltet sein. Allgemein umfaßt die Betriebsbremsanlage alle Einzelkomponenten, die zur Umsetzung der Betriebsbremsfunktion erforderlich sind und die Feststellbremsanlage umfaßt all diejenigen Komponenten des Bremssystems die zur Umsetzung der Feststellbremsfunktion notwendig sind. Hierbei sind die Feststellbrems- sowie die Betriebsbremsanlage miteinander vernetzt, so daß ein integriertes Gesamtbremssystem entsteht, bei dem die Vorzüge der einzelnen Teilbremsanlagen erhalten bleiben und neue auf der Vernetzung (Datenaustausch) basierende Funktionen ermöglicht werden. Eine elektronische Steuerung des gesamten Kraftfahrzeugbremssystems gewährleistet dabei eine fahrsituationsabhängige Ansteuerung der geeigneten Komponenten zum Bremskraftaufbau bzw. zum Halten der eingesteuerten Bremskraft. Insbesondere wird bei Fahrzeuggeschwindigkeiten V ≠ 0 sowie Betätigung des Bremssytemes über ein entsprechendes Bedienelement der Feststellbremsanlage bzw. bei vorliegen eines gleichwertigen Ansteuerungssignals eines elektrischen Fahrerassistenzsystems eine gezielte Ansteuerung der aktiven Bremsvorrichtung zum Bremskraftaufbau der Betriebsbremsanlage realisiert. Dadurch kann vorteilhaft eine bereits in der Betriebsbremsanlage vorhandene Komponente zum Bremskraftaufbau (ASR/ESP Pumpe, analoger Booster, Brake-by-wire-Aktuator etc.) genutzt werden. Die Anforderungen an eine elektrisch steuerbare Feststellbremsanlage hinsichtlich ihrer dynamischen Bremsfunktion (Hilfs-/Notbremsfunktion) wird also mit Hilfe einzelner bereits vorhandener Komponenten der Betriebsbremsanlage umgesetzt. Die statische Anforderung an eine Feststellbremsfunktion, das heißt das Festsetzen bzw. Halten des Fahrzeuges im Stillstand, wird mittels einer reibschlüssigen oder formschlüssigen Verriegelung bzw. Sperrung des Fahrzeugantriebsstranges (z.B. Getriebe, Differential, Rad etc.) oder zumindest einer bereits zugespannten Radbremse durch elektromechanische Betätigung einer entsprechenden Verriegelungs- bzw. Sperrvorrichtung am Fahrzeugantriebsstrang oder der Radbremse umgesetzt. Damit kann eine solche Verriegelungs- bzw. Sperrvorrichtung der Feststellbremsanlage gezielt für diese Anwendungen ausgelegt werden und kann somit entsprechend günstig dimensioniert werden. Im wesentlichen kommt bei Betätigung der Feststellbremsanlage bzw. bei einem gleichwertigen Ansteuerungssignal eines elektronischen Fahrerassistenzsystems (z.B. ABS, ASR, ESP etc.) während der Fahrt (d. h. V ≠ 0) die Betriebsbremsanlage mit ihren Einzelkomponenten zum Einsatz, um das Fahrzeug bis zum Stillstand abzubremsen. Für diese Fahrzustände ist die Betriebsbremse ohnehin besser geeignet, da sie bereits auf eine Betätigung während der Fahrt, eine hohe Betätigungsdynamik, feine Dosierbarkeit, wenig Geräusch, großen Fahrkomfort und den Betrieb mit Schlupfregelsystemen ausgelegt ist. Weiterhin wirkt die Betriebsbremsanlage in der Regel auf alle vier Räder des Kraftfahrzeugbremssystems und eröffnet somit gleichzeitig im Hinblick auf zukünftige Fahrerassistenzsysteme, wie z.B. Anfahr-, Rangier- und Kurzstophilfen, qualitativ bessere Funktionen.

Eine alternative Variante des Kraftfahrzeugbremssystems sieht vor, das bereits im bzw. nahezu im Stillstand befindliche Fahrzeug, d. h. bei V ≈ 0, erst zu verriegeln bzw. zu sperren, wenn ein durch die elektronische Steuereinheit ECU generiertes Verhinderungssignal für die Verriegelung bzw. Sperrung unterdrückt wird. Dies gestattet das Fahrzeug unter andauernder Zuspannung der Radbremsen mittels der Betriebsbremsanlage im Stillstand zu halten bis eine Unterdrückung des Verhinderungssignals einen Bremskraftabbau veranlaßt, beispielsweise durch Deaktivierung der aktiven Betriebsbremsvorrichtung, bei gleichzeitiger Aktivierung der Verriegelungs- bzw. Sperrvorrichtung. Durch das Erhalten bzw. Unterdrücken des Verhinderungssignals findet somit eine koordinierte Übergabe zwischen Halten des Fahrzeuges mittels Betriebsbremsanlage und Halten mittels Feststellbremsanlage statt.

Erfindungsgemäß wird das Erhalten bzw. Unterdrücken des Verhinderungssignales für die Verriegelung bzw. Sperrung bei V ≈ 0 an das Vorliegen fahrsituationsabhängiger oder sonstiger fahrzeugrelevanter Kriterien gekoppelt. D. h. zunächst wird die Verriegelung bzw. Sperrung durch das von der ECU generierte Verhinderungssignal unterbunden, z. B. während der Fahrt. Erst bei Vorliegen spezifischer Kriterien und V ≈ 0 wird das Verhinderungssignal durch die ECU gezielt unterbunden und die Verriegelungs- bzw. Sperrvorrichtung aktiviert. Hierbei sind je nach beabsichtigtem Aufwand zahlreiche Auslösekriterien für die Unterdrückung eines derartigen Verhinderungssignales denkbar. Im Einzelfall mag dies einen zusätzlichen Sensoraufwand zur Erfassung der verschiedenen Auslösekriterien bedeuten. Beispielsweise wird das Verhinderungssignal unterdürckt falls der Getriebewählhebel bei Automatikgetriebe in P-Stellung steht (Parkstellung) oder aber falls ein Fehler in der Betriebsbremse vorliegt. Weiterhin ist es möglich das.Unterdrücken des Verhinderungssignals an den Zustand der Zündung (Zündung aus) zu koppeln oder an den Zustand der Motorhaube, d. h. Erzeugung des Verhinderungssignales beispielsweise bei Öffnen der Motorhaube. Ferner kann das Unterdrücken des Verhinderungssignal für die Verriegelung bzw. Sperrung auch beim Öffnen einer der Fahrzeugtüren oder bei Verlassen des Fahrersitzes veranlaßt werden. Dies erfodert jedoch in jedem Falle die Sensierung der Fahrersitzbelegung. Schließlich ist es möglich die elektronische Steureinheit mit einem Zeitschaltglied zu versehen, das nach Verstreichen eines vorbestimmten Zeitintervalls (z. B. 1 min.) das Verhinderungssignal für die Verriegelung bzw. Sperrung des Fahrzeuges unterbindet. Die Liste der genannten Kriterien ist selbstverständlich nicht abschließend. Allen Kriterien für das Unterdrücken des Verhinderungssignals ist gemeinsam, daß bei V ≈ 0 eine Übergabe vom Halten mittels Betriebsbremse, d. h. beispielsweise ist die aktive Betriebsbremsvorrichtung aktiviert, zum Halten mittels Feststellbremse, d. h. Verriegelungs- bzw. Sperrvorrichtung ist aktiviert, erfolgt. Diese Übergabe gilt dabei nicht für die eine beschriebene Richtung sondern ist auch umgekehrt denkbar, also Übergabe von der Feststellbrems- zur Betriebsbremsfunktion z. B. beim Anfahren. Letztlich ist es durch Festlegung geeigneter Auslösekriterien möglich nicht in jedem Fall zwischen der Betriebsbrems- und der Feststellbremsfunktion umschalten zu müssen. Beispielsweise kann gestattet werden die Betriebsbremsfunktion bei Kurzzeitstops (z. B. Ampelstop) zu erhalten und keine Übergabe an die Feststellbremsfunktion zu veranlassen.

In einer vorteilhaften Ausführung des Kraftfahrzeugbremssystems erfolgt die reibschlüssige oder formschlüssige Verriegelung bzw. Sperrung des Fahrzeugantriebsstranges oder zumindest einer zugespannten Radbremse mittels einer elektronischen Steuerung automatisch, das heißt unabhängig von einer Betätigung der Feststellbremsanlage über ein Bedienelement durch den Fahrer, sofern der Betrag der Fahrzeuggeschwindigkeit V ≈ 0 beträgt bzw. unterhalb eines geringfügigen Schwellenwertes liegt. Dadurch können auf einfache Weise Zusatzfunktionen der Feststellbremsanlage wie z.B. selbsttätiges Festsetzen bzw. Sperren des Antriebsstranges oder aber der Radbremsen bei Verlassen des Fahrzeuges umgesetzt werden. In einer anderen vorteilhaften Ausführung des Kraftfahrzeugbremssystems ist die reibschlüssige oder formschlüssige Verriegelung bzw. Sperrung des Fahrzeugantriebsstranges oder zumindest einer zugespannten Radbremse elektrisch betätigbar bzw. lösbar. Dadurch kann der unnötige Bauraum- bzw. Bauteilaufwand herkömmlicher Bedienelemente der Feststellbremsanlage (z.B. Hebel, Pedal) entfallen und die Verriegelungseinrichtung kann beispielsweise unter Zwischenschaltung einer Steuereinheit mittels eines einfachen elektrischen Tasters bzw. Betätigungsschalters elektrisch angesteuert werden. Ein derartiges elektrisches Bedienelement kann besonders günstig an jeder geeigneten Stelle im Fahrgastraum platzsparend angeordnet werden.

In einer bevorzugten Weiterentwicklung des Kraftfahrzeugbremssystems ist eine formschlüssige mechanische Verriegelungs- bzw. Sperrvorrichtung im Getriebe oder einer Differentialeinheit vorgesehen, die sowohl elektrisch als auch mechanisch betätigbar bzw. lösbar ist. Eine derartige mechanische Verriegelungsvorrichtung ist für Fahrzeuge mit Automatikgetriebe ohnehin schon als P-Stellung des Getriebes vorhanden, kann jedoch in der Regel nicht vom Bremssystem aus betätigt werden. Eine Umsetzung der Erfindung bei Kraftfahrzeugen mit Schaltgetriebe erfordert die Installation einer Getriebesperre bzw. Getriebeklinke auf der Abtriebsseite. Die Betätigung der Verriegelungsvorrichtung sowohl elektrisch als auch mechanisch trägt dem möglichen Fehlerfall Rechnung, wonach beispielsweise bei Ausfall des elektrischen Betätigungsweges eine mechanische Notbetätigung gestattet werden muß.

In einer weiterführenden Ausführungsvariante besitzt das Kraftfahrzeugbremssystem eine formschlüssige mechanische Verriegelungs- bzw. Sperrvorrichtung an zumindest einem Fahrzeugrad, wobei diese elektrisch betätig- bzw. lösbar ist. Eine solche Verriegelungsvorrichtung kann beispielsweise als einfache Rastklinke ausgeführt sein, die das Fahrzeugrad im Stillstand sperrt und somit ein unbeabsichtigtes Wegrollen des Fahrzeuges verhindert.

In einer weiteren bevorzugten Ausführungsform ist die sperrende mechanische Verriegelungsvorrichtung in die Radbremse integriert, wobei die Verriegelungsvorrichtung elektrisch betätigbar bzw. lösbar ist und zumindest eine Radbremse im zugespannten Zustand sperrt. Das eigentliche Zuspannen der Radbremse kann dabei auf anderem Wege, beispielsweise über die von der aktiven Betriebsbremsvorrichtung eingesteuerte Betätigungskraft erfolgen. Die mechanische Verriegelungsvorrichtung innerhalb der Radbremse kann dabei sowohl reibschlüssig wie auch formschlüssig ausgeführt sein. Hieraus ergibt sich der Vorteil, daß die mechanische Verriegelungsvorrichtung sehr einfach ausgeführt werden kann, da sie nur geringer Betätigungskräfte bedarf.

Gemäß einer vorteilhaften Ausführungsvariante besitzt das Bremssystem zur Umsetzung der Feststellbremsfunktion eine vom üblichen Bordnetz getrennte eigenständige zweite Energieversorgungseinheit. Eine solche eigenständige Energieversorgungseinheit kann beispielsweise als Backup-Batteriepaket ausgeführt sein. Die zweite Energieversorgungseinheit ist notwendigerweise erforderlich bei Bremssystemen, für die neben der elektrischen Betätigungsmöglichkeit der Radbremsen bzw. der Verriegelungsvorrichtung kein mechanischer Durchgriff zur Radbremse bzw. der verriegelungsvorrichtung besteht. Fehlt eine solche mechanische Betätigungsmöglichkeit der Radbremse bzw. der Verriegelungsvorrichtung, ist bei Ausfall des primären Bordnetzes (üblicherweise Autobatterie) eine zweite eigenständige Energieversorgungseinheit erforderlich, um den ungestörten Signalfluß bzw. die Versorgungsenergie auch im Notfall bereitzustellen.

Gemäß einer anderen Variante ist für die Feststellbremsanlage, d. h. für sämtlich Komponenten des Gesamtbremssystems zur Umsetzung der Feststellbremsfunktion, eine von der Bedieneinrichtung der Betriebsbremsanlage zweite, eigenständige Bedieneinrichtung für die Feststellbremsfunktion vorgesehen. Die Bedieneinrichtung für die elektrisch steuerbare Feststellbremsanlage ist bevorzugt als einfacher elektrischer Schalter, Taster oder Wipp-Taster ausgeführt. Ein derartig einfaches Bedienelement zur Erfassung des Fahrerwunsches kann aufgrund des geringen Platzbedarfes an beliebiger geeigneter Stelle im Fahrgastraum des Fahrzeuges untergebracht werden und eine problemlose elektrische Signalübertragung der Betätigungssignale zur elektronischen Steuereinheit ermöglichen. Ausgehend von der elektronischen Steuereinheit (ECU) werden dann fahrsituationsabhängig die geeigneten Komponenten des Bremssystems angesteuert, um das Fahrzeug entweder während der Fahrt abzubremsen oder aber im Stillstand festzusetzen bzw. zu sperren.

Eine besonders vorteilhafte Ausführung des Kraftfahrzeugbremssystems sieht vor, das Bremssystem mit nur einer einzigen elektronischen Steuereinheit ECU sowohl für die Betriebs- als auch für die Feststellbremsanlage auszurüsten. Dabei erfaßt die elektronische Steuereinheit sowohl über eine entsprechende Sensorik Daten über den jeweiligen Fahrzustand des Fahrzeuges sowie die vom Fahrer über entsprechende Bedienelemente eingesteuerten Fahrerwünsche bezüglich der Betriebsbrems- bzw. Feststellbremsfunktion. Die Betriebsbrems- und die Feststellbremsanlage sind damit insbesondere über die zentrale elektronische Steuereinheit ECU derart miteinander vernetzt, daß ein stetiger Daten- und Informationsaustausch zwischen den einzelnen Komponenten des Kraftfahrzeugbremssystems gegeben ist. Insbesondere ergeben sich daraus Vorteile hinsichtlich der Funktionalität des gesamten Bremssystems wie auch hinsichtlich des reduzierten Bauteilaufwandes, da verschiedene zentralisierte Komponenten des Bremssystems (z.B. HCU, ECU etc.) sowohl für die Betriebsals auch für die Feststellbremsfunktion genutzt werden können.

Gemäß einer weiteren vorteilhaften Variante des Kraftfahrzeugbremssystems ist die Betriebsbremsanlage mit einem elektronischen Schlupfregelsystem (z.B. ABS, ESP,, ASR) ausgestattet. Durch die oben bereits beschriebene Vernetzung von Feststellbrems- und Betriebsbremsanlage innerhalb des gemeinsamen Gesamtbremssystems ist somit nur ein einziges Schlupfregelsystem erforderlich, da bei Feststellbremsbetätigung während der Fahrt ohnehin auf die entsprechenden Komponenten der Betriebsbremsanlage mit Schlupfregelsystem zurückgegriffen wird. Falls eine Aktivierung des Bremssystems über die Bedieneinrichtung der Betriebsbremsanlage (z. B. Pedal) nicht möglich ist, wird also weiterhin eine über das Bedienelement der Feststellbremsanlage veranlaßte schlupfgeregelte Bremsung gestattet, ohne innerhalb der Feststellbremsanlage ein eigenständiges Schlupfregelsystem installieren zu müssen. Daraus ergibt sich für die Feststellbremsfunktion ein zusätzliches Komfortmerkmal, das für bisher bekannte Bremssysteme nicht realisierbar war.

Weiterhin wird um Schutz ersucht für ein erfindungsgemäßes Verfahren zur fahrsituationsabhängigen Steuerung des Kraftfahrzeugbremssystems mit einer integrierten elektrisch steuerbaren Feststellbremsanlage sowie einer Betriebsbremsanlage. Dabei besitzt die Betriebsbremsanlage eine dosierbare bzw. regelbare aktive Betriebsbremsvorrichtung (z.B. ASR/ESP-HCU, analoger/aktiver Booster, Brake-by-wire-Anlage etc.), die zum Fremdbremskraftaufbau an zumindest einer der Radbremsen des Bremssystems geeignet ist. Ferner werden innerhalb des Bremssystems beispielsweise durch die bereits innerhalb des ABS vorhandene Sensorik Daten über die aktuelle Fahrsituation des Fahrzeuges erfaßt sowie zur Weiterverarbeitung einer elektronischen Steureinheit ECU zugeführt. Die ECU hat die Aufgabe, in Verbindung mit eingehenden Daten bezüglich des Fahrerbremswunsches geeignete Ausgangssignale für das Bremssystem zur Umsetzung des Fahrerbremswunsches zu generieren. Dabei wird im einzelnen bei einer Fahrzeuggeschwindigkeit V ≠ 0 sowie bei Betätigung der Feststellbremsanlage über ein entsprechendes Bedienelement bzw. bei Vorliegen eines gleichwertigen Ansteuerungssignals eines elektronischen Fahrerassistenzsystems mittels der ECU gezielt die aktive Betriebsbremsvorrichtung zum Bremskraftaufbau angesteuert. Das heißt, die dynamische Verwendung der Feststellbremse während der Fahrt wird unter Zuhilfenahme einzelner Komponenten der Betriebsbremsanlage umgesetzt. Bei Fahrzeugstillstand V ≈ 0 bzw. bei Unterschreiten einer vordefinierten geringen Fahrgeschwindigkeitsschwelle wird eine reibschlüssige oder formschlüssige Verriegelung bzw. Sperrung des Fahrzeugantriebsstranges (z.B. Getriebe, Differential, Fahrzeugrad etc.) oder zumindest einer zugespannten Radbremse durch elektromechanische Betätigung einer entsprechenden Verriegelungsvorrichtung am Fahrzeugantriebsstrang bzw. an der Radbremse aktiviert. Diese Verriegelung oder Sperrung ist lediglich dazu da, das im Stillstand befindliche Fahrzeug gegen Wegrollen zu sichern. Das eigentliche Abbremsen des Fahrzeuges soll nicht über die Verriegelung bzw. Sperrung innerhalb des Antriebsstranges oder aber der Radbremse umgesetzt werden. Durch ein derartiges Verfahren zur fahrsituationsabhängigen Steuerung des Kraftfahrzeugbremssystems werden gleichsam die vorteilhaften Funktionsmerkmale der Betriebsbremsanlage (während der Fahrt) und der Feststellbremsanlage (im Fahrzeugstillstand) genutzt.

Vorteilhafte Ausführungsbeispiele der Erfindung werden anhand der Zeichnung in drei Figuren gezeigt und im folgenden näher erläutert.

Es zeigen:

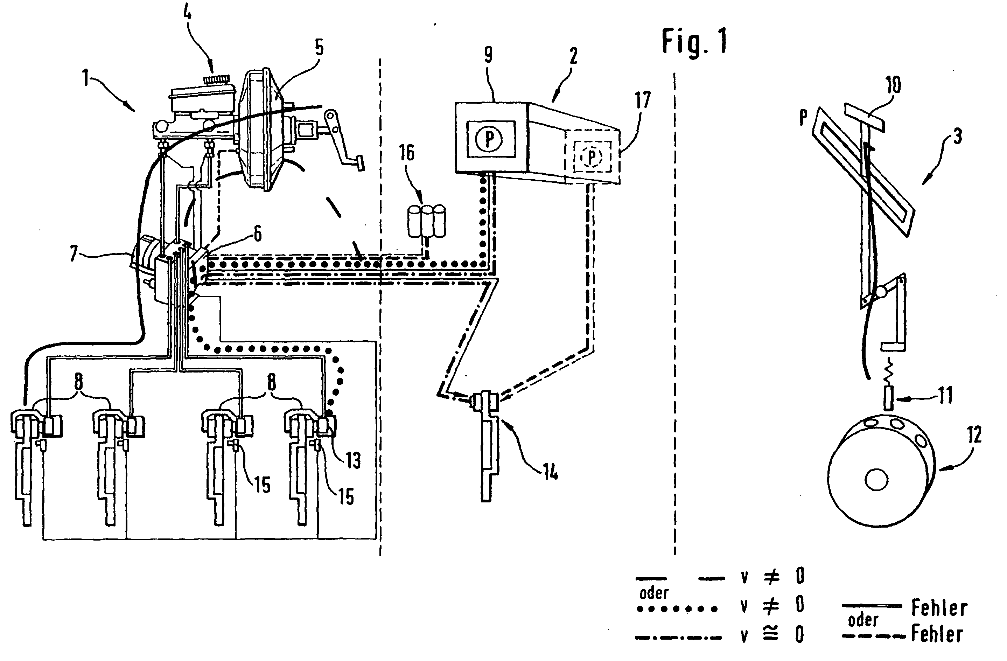

- Fig. 1 - 3: drei unterschiedliche Beispiele eines Kraftfahrzeugbremssystems mit Vernetzung der elektrisch steuerbaren Feststellbremsanlage mit der Betriebsbremsanlage unter Berücksichtigung des Signalflusses bzw. des Versorgungsenergieflusses für unterschiedliche Fahrzustände (V ≠ 0, V ≈ 0) sowie einer Störung bzw. eines Fehlers im Bremssystem.

Alle drei Figuren zeigen eine schematische Übersicht des gesamten Kraftfahrzeugbremssystems, wobei die einzelnen Teilfunktionen (Betriebsbremse, Feststellbremse, Getriebesperre bzw. Sperrung des Antriebsstranges) innerhalb der Figuren nebeneinander aufgeführt sind und durch senkrechte Strichelung voneinander getrennt sind. Dabei ist die Betriebsbremsanlage 1 jeweils links, die Feststellanlage 2 in der Mitte und die Getriebesperre bzw. Sperre des Fahrzeugantriebsstranges 3 jeweils rechts innerhalb der Figuren dargestellt. Allgemein umfaßt die Betriebsbremsanlage alle Komponenten, die zur Umsetzung der Betriebsbremsfunktion erforderlich sind, und die Feststellbremsanlage analog alle Komponenten, die zur Umsetzung der Feststellbremsfunktion notwendig sind. Dabei sind sowohl die Betriebs- wie auch die Feststellbremsanlage in die Gesamtbremsanlage integriert.

Fig. 1 ist ein Kraftfahrzeugbremssystem zu entnehmen, bei dem die Betriebsbremsanlage 1 mit der Feststellbremsanlage 2 vernetzt ist. Dabei sind Betriebsbremsanlage 1 und elektrisch steuerbare Feststellbremsanlage 2 derart miteinander verknüpft, daß die gesamte Funktionalität der elektrisch steuerbaren Feststellbremsanlage EPB 2 durch die Systemvernetzung der Fahrzeugkomponenten von Betriebsbremsanlage 1 und Feststellbremsanlage 2 erreicht wird. Im einzelnen weist die Betriebsbremsanlage 1 eine Betätigungseinheit 4 mit einem aktiven Booster 5 auf, die in der Lage ist, unter Zwischenschaltung einer elektronischen Steuereinheit ECU 6 sowie einer hydraulischen Reglereinheit HCU 7 in der Lage ist, die einzelnen Radbremsen 8 in Abhängigkeit vom Fahrerwunsch oder aber fahrsituationsabhängig je nach Ausgangssignal eines nicht gezeigten Fahrerassistenzsystems (z.B. ABS, ASR/ESP etc.) anzusteuern. Unabhängig von der Ausstattung des Kraftfahrzeugbremssystems mit einem der oben genannten Fahrerassistenzsysteme besitzt das Bremssystem in jedem Falle eine dosierbare bzw. regelbare aktive Bremsvorrichtung (z.B. ASR/ESP-HCU, analoger/aktiver Booster, aktive Brake-by-wire-Anlage etc.), die zum Fremdbremskraftaufbau an zumindest einer der Radbremsen geeignet ist. Die in das Gesamtbremssystem integrierte elektrisch steuerbare Feststellbremsanlage 2 weist ein Bedienelement 9 auf, welches in Signalverbindung mit der elektronischen Steuereinheit ECU 6 steht. Die ECU 6 wiederum ist in der Lage, entsprechende Ansteuerungssignale oder aber auch die erforderliche Betätigungsenergie zu den Radbremsen 8 weiterzuleiten. Die in Fig. 1 im wesentlichen auf der linken Seite gezeigte Anordnung des Kraftfahrzeugbremssystems gibt dabei die Ausführung für Kraftfahrzeuge mit einem Schaltgetriebe wieder. Besitzt das Kraftfahrzeug ein Automatikgetriebe, ist es möglich, die bereits im Automatikgetriebe enthaltene Getriebesperre (P-Stellung des Getriebewählhebels) für die Feststellbremsfunktion zu nutzen. Eine solche Getriebesperre 3 für AutomatikGetriebe ist in Fig. 1 auf der rechten Seite schematisch verdeutlicht. Insgesamt kann durch die Systemvernetzung von Feststellbremsanlage und Betriebsbremsanlage die gesamte Funktionalität der elektrischen Feststellbremsanlage genutzt werden, das heißt sowohl die statische Funktion im Fahrzeugstillstand wie auch die dynamische Funktion während der Fahrt.

Im einzelnen wird die erste Teilfunktion, nämlich das Parken bzw. Festsetzen des Fahrzeuges bei einer Geschwindigkeit v ≈ 0 bzw. Unterschreiten einer entsprechend geringen Fahrgeschwindigkeitsschwelle, bei Betätigung des Bedienelementes 9 durch hydraulisches Zuspannen sowie elektromechanisches Verriegeln der Radbremsen 8 realisiert. Dabei wird gemäß strichpunktierter Linienführung in Fig. 1 im Fahrzeugstillstand über die kombinierte elektronische Steuerungseinheit 6 sowie die für ASR bzw. ESP vorgesehene hydraulische Reglereinheit HCU angesteuert und zunächst hydraulisch zugespannt. Unmittelbar im Anschluß veranlaßt ein Ansteuerungssignal der kombinierten ECU jeweils eine Aktivierung der Verriegelungsvorrichtungen, die in die Radbremsen integriert sind. Die hydraulisch zugespannten Radbremsen 8 verbleiben somit im Fahrzeugstillstand durch die Verriegelung in ihrem zugespannten Zustand.

Alternativ dazu kann insbesondere bei Verwendung von Brakeby-wire-Anlagen eine Betätigung des Bedienelementes 9 der elektrischen Feststellbremsanlage 2 zu einem dosierten elektromechanischen Zuspannen insbesondere der Hinterachsradbremsen 8 führen, die entweder durch eine zusätzliche Verriegelungsvorrichtung in ihrem zugespannten Zustand gehalten werden oder aber beispielsweise aufgrund von Selbsthemmung innerhalb eines Spindelantriebes im elektromechanisch zugespannten Zustand verbleiben. Allgemein können derartige verriegelbare Radbremsen 8 insbesondere als Scheibenbremskombisattel oder aber als verriegelbare Duo-Servo-Trommelbremse ausgeführt sein.

Das elektrische Bedienelement 9 zur Umsetzung der Feststellbremsfunktion ist insbesondere als einfacher elektrischer Schalter oder als Taster bzw. Wipp-Taster ausgeführt. Das Bedienelement 9 besitzt dabei die Aufgabe, den Fahrerwunsch exakt zu erfassen und in Form elektrischer Signale an die elektronische Steuereinheit ECU 6 zu übermitteln. Weiterhin sollte das Bedienelement 9 in der Lage sein, eine dosierte Ansteuerung der Radbremse zu ermöglichen, beispielsweise über die Betätigungsdauer eines entsprechend gestalteten Bedienelementes. Bei Verwendung einer kombinierten elektronischen Steuereinheit ECU sowohl für die Betriebsbremsanlage 1 als auch für die Feststellbremsanlage 2, das heißt sowohl für die ASR-/ESP-Funktion wie auch für die EPB-Funktion, wobei die Steuereinheit ECU vom Bedienelement 9 getrennt ist, kann das Bedienelement 9 vorteilhaft an einem beliebigen Ort des Fahrgastraumes (z.B. Armaturenbrett, Lenkrad, Getriebewählhebel etc.) angeordnet werden. Somit kann eine eigenständige ECU ausschließlich für die Feststellbremsfunktion entfallen. Zur Nachrüstung bereits definierter Kraftfahrzeugbremssysteme mit einer bereits genannten elektrisch steuerbaren Feststellbremsanlage ist es aber weiterhin denkbar, eine Kleinst-ECU inclusive Sicherheitskonzept in das Bedienelement zur Auswertung der Betätigung des Bedienelementes (Fahrerwunscherkennung, Bedienkonzept) zu integrieren und die der ECU zugeleiteten Informationen einem Bus-System (z.B. CAN) zur Verfügung zu stellen. Selbstverständlich kann eine derartige eigenständige Steuereinheit für die Feststellbremsfunktion EPB-ECU auch an einer geeigneten anderen Stelle im Fahrzeug angeordnet werden.

Während der Fahrt, d.h. für Geschwindigkeiten v ≠ 0 bewirkt eine Betätigung des Bedienelemente 9 über die kombinierte EPB- und ASR-/ESP-ECU 6 ein hydraulisches Zuspannen der Radbremsen 8 über die innerhalb der Betriebsbremsanlage 1 enthaltene ASR-/ESP-HCU 7 bzw. den aktiven Booster 5. Insofern werden Komponenten der Betriebsbremsanlage für das Abbremsen des Fahrzeuges aus der Fahrt heraus genutzt, da diese ohnehin für den Betrieb während der Fahrt ausgelegt sind. Ist der Fahrzeugstillstand einmal erreicht, wird die oben beschriebene in die Radbremsen integrierte Verriegelungsvorrichtung aktiviert. Das Fahrzeug ist damit sicher im Stillstand festgesetzt. Die entsprechenden Daten über den Fahrzustand, d.h. insbesondere die Fahrgeschwindigkeit und die zugehörige Radgeschwindigkeit, wird durch entsprechende Sensorik ermittelt, insbesondere auch Radsensoren 15, wobei diese Daten der gemeinsamen elektronischen Steuereinheit ECU 6 zur Verfügung gestellt werden.

Als weiterer wichtiger Aspekt ist der sichere Betrieb der elektrischen Feststellbremsanlage 2 insbesondere gemäß gesetzlicher Anforderungen auch für Fehlerfälle im gesamten Bremssystem zu gewährleisten. Bei Ausfall der Funktion des hydraulischen Zuspannens der Radbremsen über die HCU 7 bzw. den aktiven Booster 5 im Falle einer Betätigung der Feststellbremsanlage 2, kann der Fahrer über den mechanischen Durchgriff der Betriebsbremsanlage 1 das Fahrzeug weiterhin abbremsen (siehe durchgezogene Linie des Signalflusses bzw. Energieflusses). Versagt die elektromechanische Verriegelung der Radbremsen 8 (siehe gestrichelte Linie in Figur 1) ist eine eigenständige, vom Bordnetz unabhängige zweite Energieversorgungseinheit 16 erforderlich. Diese zweite Energieversorgungseinheit 16 ist vorzugsweise als Backup-Batteriepaket ausgeführt und stellt bei Ausfall des Bordnetzes einen weiteren Betrieb der elektronischen Steuereinheit ECU 6 sowie auch der elektromechanischen Verriegelungsvorrichtung innerhalb der Radbremsen 8 sicher.

Analog dazu kann bei Ausfall der hydraulischen Zuspannfunktion der Radbremsen über die ASR-/ESP-HCU bzw. den aktiven Booster ein elektromechanisches Zuspannen insbesondere der Hinterachsradbremsen (Notbetätigung) ermöglicht werden. Dazu steht jede dieser Radbremsen 8 mit einer nicht gezeigten elektromechanischen Betätigungseinheit in Verbindung (z.B. Elektromotor), die in der Lage ist, die Zuspannkraft für die Radbremsen 8 aufzubringen. Außerdem ist auch eine zweite unabhängige Energieversorgungseinheit 16 erforderlich. Zur tatsächlich redundanten elektromechanischen Betätigung der Radbremsen (Notbetätigung) ist eine zweite eigenständige Bedieneinrichtung 17 für die Feststellbremsanlage 2 notwendig. Dieses ist in der Lage, die elektromechanisch betätigbaren Radbremsen 8 losgelöst von sonstigen Komponenten der Betriebsbremsanlage 1 anzusteuern, zuzuspannen und schließlich zu verriegeln. Eine solche redundante Bedieneinrichtung kann beispielsweise als eigenständiges zweites Bedienelement (z. B. Schalter, Taster etc.) oder aber als ein kombinertes Bedienelement mit zwei sich daran anschließenden eigenständigen Signalpfaden bzw. Versorgungsenergiepfaden ausgeführt sein. Im zweiten Fall ist dabei die Redundanz auf elektrischem bzw. elektronischem Wege umgesetzt.

Die oben beschriebene Funktion des Kraftfahrzeugbremssystems, insbesondere im Fehlerfall, bezieht sich zunächst auf Fahrzeuge mit Schaltgetriebe. Bei Fahrzeugen mit Automatikgetriebe kann insbesondere die bereits im Getriebe vorhandene Getriebesperre (P-Stellung des Getriebewählhebels) verwendet werden, wie sie schematisch in Figur 1 auf der rechten Seite dargestellt ist. Dazu wird je nach Fehlerfall entweder elektromechanisch oder rein mechanisch durch Betätigung des Getriebewählhebels eine entsprechende Verriegelungsvorrichtung 11 im Getriebe 12 bzw. Fahrzeugantriebsstrang aktiviert.

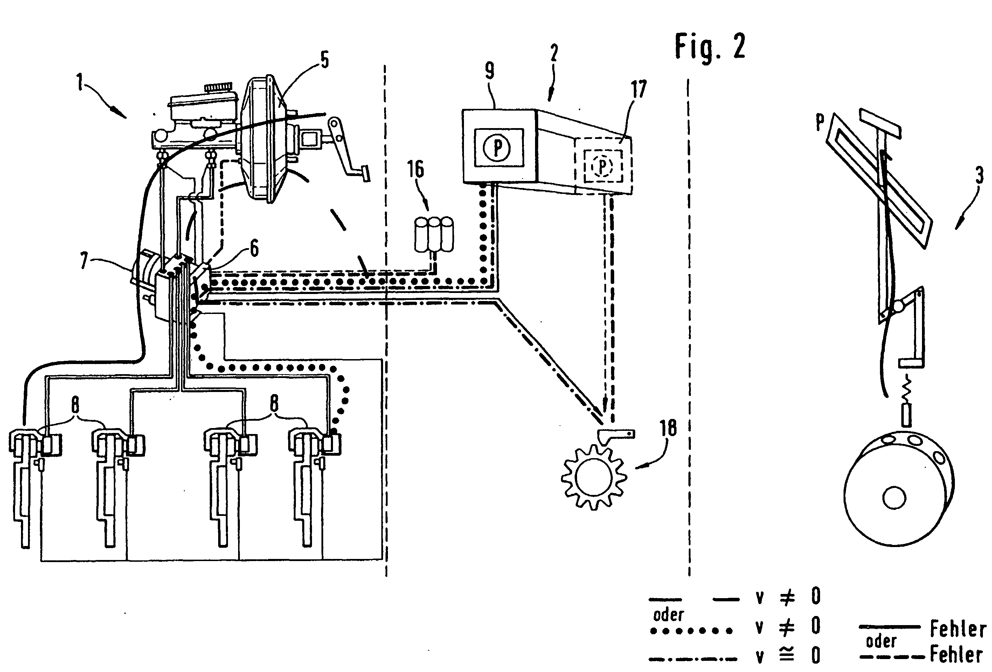

Für die Ausführung des Kraftfahrzeugbremssystems nach Figur 2 ist eine Betriebsbremsanlage 1 mit reibschlüssigen Radbremsen 8 vorgesehen, vernetzt mit einer Feststellbremsanlage 2, die eine formschlüssige separate Parksperre 18 aufweist. Eine derartige Parksperre 18 kann als formschlüssige Verriegelungs- bzw. Sperreinrichtung einen Eingriff in den Fahrzeugantriebsstrang, wie z.B. ins Differential oder Getriebe, oder aber einen Eingriff an den einzelnen Fahrzeugrädern erlauben. Im Falle von Fahrzeugen mit Automatikgetriebe kann die bekannte Getriebesperre (P-Stellung) als eine solche Parksperre 18 genutzt werden. Für das Kraftfahrzeugbremssystem gemäß Fig. 2 bewirkt eine Betätigung des Bedienelementes 9 der elektrischen Feststellbremsanlage EPB 2 im Fahrzeugstillstand v = 0 (bzw. bei Unterschreiten einer vordefinierten geringen Fahrgeschwindigkeitsschwelle) über die ECU ein elektromechanisches Betätigen der Parksperre 18, wodurch das Fahrzeug formschlüssig festgesetzt ist. Während der Fahrt wird bei EPB-Betätigung über das Bedienelement 9 (siehe punktierte Linienführung bzw. grob gestrichelte Linienführung) ein hydraulisches Zuspannen der Radbremsen über die kombinierte ECU bzw. HCU 6,7 oder aber den aktiven Booster 5 ausgeführt. Das Fahrzeug wird dabei mittels der dosierbaren aktiven Betriebsbremsvorrichtung (ASR/ESP-HCU, analoger Booster) während der Fahrt abgebremst und kann anschließend im Stillstand mittels der Parksperre 18 verriegelt werden.

Bei Ausfall der hydraulischen Zuspannfunktion der Radbremsen 8 über die ASR-/ESP-HCU bzw. den aktiven Booster 5 kann der Fahrer analog zu Figur 1 über die Betriebsbremsanlage 1 das Fahrzeug zum Stillstand bringen. Hierbei greift die übliche Redundanz einer bekannten hydraulischen Betriebsbremsanlage. Bei Störung der elektromechanischen Betätigung der Parksperre 18 muß es ein elektrisches Backup geben, das sowohl die Energieversorgung als auch die Betätigung der Parksperre 18 ohne ECU 6 sicherstellt. Dazu ist zunächst eine unabhängige zweite elektrische Energieversorgungseinheit 16 vorgesehen, die vorzugsweise als Batteriepaket ausgeführt ist. Weiterhin gibt es ein zweites losgelöstes Bedienelement 17 oder aber einen in die Bedieneinrichtung integrierten zweiten Signalbzw. Versorgungspfad, das bzw. der in der Lage ist, unabhängig von der ECU 6 die Parksperre zu betätigen. Bei Fahrzeugen mit Automatikgetriebe kann im Fehlerfalle innerhalb des Kraftfahrzeugbremssystems die bereits erläuterte Getriebesperre 3 in bekannter Weise ein Wegrollen des Fahrzeuges im Stillstand verhindern.

Die konstruktive Ausführung einer oben beschriebenen Parksperre 18 kann beispielsweise als einfache Rastklinke ausgestaltet sein. Selbstverständlich sind aber auch andere Verriegelungs- bzw. Sperrvorrichtungen denkbar, die ein formschlüssiges Festsetzen des Fahrzeuges im Stillstand ermöglichen.

Allgemein kommt der kombinierten elektronischen Steuereinheit ECU 6, die gleichsam für die Betriebsbremsanlage 1 wie auch die Feststellbremsanlage 2 zuständig ist, eine besondere Bedeutung zu. Insbesondere wird mittels der ECU 6 eine Vernetzung der Betriebsbremsanlage 1 mit der Feststellbremsanlage 2 erreicht, was einen koordinierten Einsatz der Parksperre 18 bzw. der mittels einer aktiven Betriebsbremsvorrichtung elektrisch steuerbaren Radbremse gestattet. Weiterhin kann bei Einsatz eines elektrischen Backups sowohl die bisherige manuell betätigbare Getriebesperre (bei Fahrzeugen mit Automatikgetriebe) als auch die bisherige manuell betätigbare Feststellbremse eingespart werden.

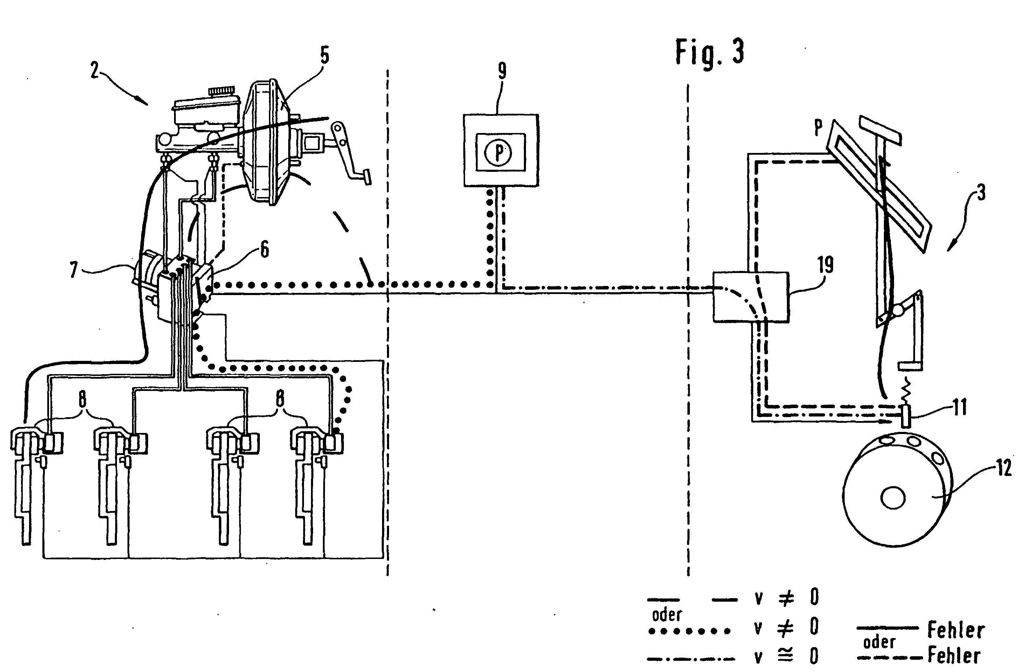

Fig. 3 zeigt ein weiteres Ausführungsbeispiel eines Kraftfahrzeugbremssystems mit über die HCU 7 bzw. ECU 6 dosiert ansteuerbaren Radbremsen 8 sowie einer Getriebesperre 3, die über eine eigene elektronische Getriebesteuereinheit (Getriebe-ECU) 19 mit der kombinierten Bremsen-ECU 6 vernetzt ist. Die beiden in Fig. 3 getrennt voneinander dargestellten ECU-Einheiten 6,19 befinden sich im ständigen Datenaustausch und können selbstverständlich zu einer einzigen Gesamtsteuereinheit zusammengefaßt werden. Vermöge der Vernetzung der Einzelkomponenten des Kraftfahrzeugbremssystems bewirkt eine Feststellbremsbetätigung im Fahrzeugstillstand über die Getriebe-ECU 19 bzw. eine Gesamt-ECU eine Aktivierung der bekannten Getriebesperre 3 und somit ein formschlüssiges Festsetzen des Kraftfahrzeuges. Die Aktivierung der Verriegelungsvorrichtung 11 im Getriebe bzw. Fahrzeugantriebsstrang kann entweder über das Bedienelement 9 vom Fahrer veranlaßt werden oder aber über ein gleichwertiges Ansteuerungssignal eines elektronischen Fahrerassistenzsystems.

Während der Fahrt, d.h. bei Fahrzeuggeschwindigkeiten v ≠ 0, bewirkt eine EPB-Betätigung gleichermaßen wie bereits in den vorangehenden Figuren ein hydraulisches Zuspannen der Radbremsen 8, das über die ECU 6 angesteuert und mittels der HCU 7 bzw. des aktiven Boosters 5 umgesetzt wird.

Selbst bei Ausfall der kompletten Fahrzeugelektrik (z. B. Ausfall Bordnetz, ECU etc.), ist es dem Fahrer in bekannter Weise möglich, über die Betriebsbremsanlage 2 das Fahrzeug zum Stillstand zu bringen und schließlich mittels der Getriebesperre 3 zu verriegeln. Im Falle eines Fehlers innerhalb der elektromechanischen Betätigung der Getriebesperre 3 ist ein mechanisches Backup erforderlich. Bei Fahrzeugen mit Automatikgetriebe ist hingegen ein mechanischer Durchgriff zur Verriegelungsvorrichtung 11 im Getriebe 12 bereits durch die P-Stellung im Automatikgetriebe selbst gewährleistet. Für Fahrzeuge mit Schaltgetriebe muß zusätzlich zur elektromechanischen Betätigung eine unabhängige eigenständige mechanische Betätigung der Getriebesperre eingeführt werden. Dieser mechanische Betätigungsweg ist jedoch ausschließlich im Falle einer Störung des üblichen elektromechanischen Betätigungsweges erforderlich und dementsprechend als Notbetätigungsweg auszulegen und zu gestalten.

Die innerhalb der Figuren 1 bis 3 dargestellten Ausführungsbeispiele von Kraftfahrzeugbremssystemen mit vernetzten Feststellbrems- und Betriebsbremsanlagen sind am Beispiel von konventionellen hydraulischen Betriebsbremsanlagen aufgeführt. Diese besitzen in der Regel als dosierbare, aktive Betriebsbremsvorrichtung eine ASR-/ESP-HCU bzw. einen analogen/aktiven Booster, um den gewünschten Fremdbremskraftaufbau an den Radbremsen 8 bei Betätigung der elektrischen Feststellbremsanlage 2 während der Fahrt zu gewährleisten. Selbstverständlich ist der erfinderische Gedanke nicht ausschließlich auf die aufgeführten dosierbaren, aktiven Betriebsbremsvorrichtungen beschränkt. Der Grundgedanke der Vernetzung von Betriebsbremsanlage 1 und Feststellbremsanlage 2 läßt sich beispielsweise auch auf Brake-by-wire-Bremssysteme anwenden, die unter Umständen elektromotorische aktive Betriebsbremsvorrichtungen aufweisen.

## Patentansprüche

1. Kraftfahrzeugbremssystem mit einer elektrisch steuerbaren Feststellbremsanlage (2) sowie einer Betriebsbremsanlage (1), die eine dosierbare bzw. regelbare, aktive Betriebsbremsvorrichtung, z.B. eine ASR-/ESP-HCU, einen analogen/aktiven Booster, ein Brake-bywire-System etc., aufweist, geeignet zum Fremdbremsdruckaufbau an zumindest einer Radbremse (8) des Bremssystems und mit einer elektronischen Steuereinheit ECU (6) zur Ansteuerung der Radbremsen (8), wobei eine mittels der elektronischen Steuereinheit ECU (6) bewirkte Ansteuerung der aktiven Betriebsbremsvorrichtung (5,7) zum Bremskraftaufbau, bei Betätigung eines Bedienelementes (9,17) für die Feststellbremsanlage (2) bzw. bei einem gleichwertigen Ansteuerungssignal eines elektronischen Fahrerassistenzsystems, falls die Fahrzeuggeschwindigkeit V ≠ 0 beträgt, stattfindet, **gekennzeichnet durch**, eine mittels der elektronischen Steuereinheit ECU (16) bewirkte:
• elektromechanische Aktivierung einer Verriegelungsbzw. Sperrvorrichtung (11) am Fahrzeugantriebsstrang oder an zumindest einer zugespannten Radbremse zur reibschlüssigen oder formschlüssigen Verriegelung bzw. Sperrung des Fahrzeuganstriebsstranges wie z.B. Getriebe, Differential, Rad etc., oder der Radbremse (8), nach deren Zuspannung, falls die Fahrzeuggeschwindigkeit V ≈ 0 beträgt und falls eine Unterdrückung eines **durch** eine elektronische Steuereinheit ECU (6) generierten Verhinderungssignals für die Verriegelung bzw. Sperrung zur koordinierten Umsetzung der Betriebs- bzw. Feststellbremsfunktion vorliegt, wobei eine Unterdrückung des Verhinderungssignales an das Vorliegen fahrsituationsabhängiger oder sonstiger fahrzeugrelevanter Kriterien außer der Fahrzeuggeschwindigkeit V gekoppelt ist.

2. Kraftfahrzeugbremssystem nach Anspruch 1, **dadurch gekennzeichnet, daß** die Unterdrückung des von der elektronischen Steuereinheit (6) generierten Verhinderungssignals für die Verriegelung bzw. Sperrung in Abhängigkeit vom Fahrzustand des Fahrzeuges innerhalb der Steuereinheit (6) erfolgt.

3. Kraftfahrzeugbremssystem nach einem der vorhergehenden Ansprüche, **dadurch gekennzeichnet, daß** die elektronische Steuereinheit (6) ein Zeitschaltglied aufweist, das nach Verstreichen eines vorgegebenen Zeitintervalls eine Unterdrückung des Verhinderungssignals für die Verriegelung bzw. Sperrung des Fahrzeuges bewirkt.

4. Kraftfahrzeugbremssystem nach einem der vorhergehenden Ansprüche, **dadurch gekennzeichnet, daß** die reibschlüssige oder formschlüssige Verriegelungs- bzw. Sperrvorrichtung (11) des Fahrzeugantriebsstranges oder zumindest einer zugespannten Radbremse (8) mittels einer elektronischen Steuerung (6) automatisch, d.h. unabhängig von einer Betätigung der Feststellbremsanlage (2) über ein Bedienelement (9,17) erfolgt, falls die Fahrzeuggeschwindigkeit V ≈ 0 beträgt.

5. Kraftfahrzeugbremssystem nach einem der vorhergehenden Ansprüche, **dadurch gekennzeichnet, daß** die reibschlüssige oder formschlüssige Verriegelungs- bzw. Sperrvorrichtung (11) des Fahrzeugantriebsstranges oder zumindest einer zugespannten Radbremse (8) elektrisch betätigbar bzw. lösbar ist.

6. Kraftfahrzeugbremssystem nach einem der vorhergehenden Ansprüche, **dadurch gekennzeichnet, daß** eine formschlüssige mechanische Verriegelungs- bzw. Sperrvorrichtung (11) im Antriebsstrang, im Getriebe oder einer Differentialeinheit vorgesehen ist, die sowohl elektrisch als auch mechanisch betätigbar bzw. lösbar ist.

7. Kraftfahrzeugbremssystem nach einem der Ansprüche 1 - 5, **dadurch gekennzeichnet, daß** eine formschlüssige, mechanische Verriegelungs- bzw. Sperrvorrichtung (11) an zumindest einem Fahrzeugrad vorgesehen ist, die elektrisch betätigbar bzw. lösbar ist.

8. Kraftfahrzeugbremssystem nach einem der Ansprüche 1 - 5, **dadurch gekennzeichnet, daß** eine zumindest eine Radbremse (8) im zugespannten Zustand sperrende, mechanische Verriegelungsvorrichtung in die Radbremse (8) integriert ist, wobei die Verriegelungsvorrichtung elektrisch betätigbar bzw. lösbar ist.

9. Kraftfahrzeugbremssystem nach einem der vorhergehenden Ansprüche, **dadurch gekennzeichnet, daß** die Feststellbremsanlage (2) eine vom üblichen Bordnetz getrennte, eigenständige zweite Energieversorgungseinheit (16) aufweist.

10. Kraftfahrzeugbremssystem nach einem der vorhergehenden Ansprüche, **dadurch gekennzeichnet, daß** die Feststellbremsanlage (2) eine von der Bedieneinrichtung der Betriebsbremsanlage (1) getrennte zweite, eigenständige Bedieneinrichtung (9,17) für die Feststellbremsfunktion aufweist.

11. Kraftfahrzeugbremssystem nach einem der vorhergehenden Ansprüche, **dadurch gekennzeichnet, daß** das Bremssystem nur eine einzige elektronische Steuereinheit ECU (6) sowohl für die Betriebs-(1) als auch für die Feststellbremsanlage (2) aufweist.

12. Kraftfahrzeugbremssystem nach einem der vorhergehenden Ansprüche, **dadurch gekennzeichnet, daß** die Betriebsbremsanlage (1) ein elektronisches Schlupfregelsystem aufweist.

13. Verfahren zur fahrsituationsabhängigen Steuerung eines Kraftfahrzeugbremssystems mit einer elektrisch steuerbaren Feststellbremsanlage (2) sowie einer Betriebsbremsanlage (1), die eine dosierbare bzw. regelbare aktive Betriebsbremsvorrichtung, z.B. eine ASR-/ESP-HCU, einen analogen/aktiven Booster, ein Brake-bywire-System etc., aufweist, geeignet zum Fremdbremskraftaufbau an zumindest einer Radbremse (8) des Bremssystems und mit einer elektronischen Steuereinheit ECU (6) zur Ansteuerung der Radbremsen, wobei folgende Schritte druchgeführt werden:
• eine Erfassung des aktuellen Fahrzustandes des Fahrzeuges und Verarbeitung der fahrsituationsabhängigen Daten innerhalb einer elektronischen Steuereinheit ECU (6) zur Generierung geeigneter Ansteuerungssignale für das Bremssystem in Abhängigkeit vom Bremswunsch des Fahrers,
• eine mittels der elektronischen Steuereinheit ECU (6) bewirkte Ansteuerung der aktiven Betriebsbremsvorrichtung (5,7) zum Bremskraftaufbau, bei Betätigung eines Bedienelementes (9,17) für die Feststellbremsfunktion bzw. bei einem gleichwertigen Ansteuerungssignal eines elektronischen Fahrerassistenzsystems, falls die Fahrzeuggeschwindigkeit V ≠ 0 beträgt,
• eine mittels der elektronischen Steuereinheit ECU (6) bewirkte elektromechanische Aktivierung einer Verriegelungs- bzw. Sperrvorrichtung (11) am Fahrzeugantriebsstrang oder an zumindest einer zugespannten Radbremse zur reibschlüssigen oder formschlüssigen Verriegelung bzw. Sperrung des Fahrzeuganstriebsstranges, z.B. des Getriebes, des Differentials, des Rades etc., oder der Radbremse (8), nach deren Zuspannung, falls die Fahrzeuggeschwindigkeit V ≈ 0 beträgt und falls ein durch eine elektronische Steuereinheit ECU (6) generiertes Verhinderungssignal für die Verriegelung bzw. Sperrung unterdrückt wird, wobei eine Unterdrückung des Verhinderungssignals an das Vorliegen fahrsituationsabhängiger oder fahrzeugrelevanter Kriterien außer der Fahrzeuggeschwindigkeit V gekoppelt ist,
• einen Bremskraftabbau bei erfolgter elektromechanischer Aktivierung der Verriegelungs- bzw. Sperrvorrichtung (11) am Fahrzeugantriebsstrang oder an zumindest einer zugespannten Radbremse (8).

## Claims

1. Automotive vehicle brake system with an electrically controllable parking brake system (2) and a service brake system (1) which includes a controllable or regulatable active service brake device, e.g. a TCS-system/ESP-system, HCU (Hydraulic Control Unit), an analog/active booster, a brake-by-wire system, etc., appropriate for the buildup of independent brake pressure on at least one wheel brake (8) of the brake system, and with an electronic control unit ECU (6) for actuating the wheel brakes (8), wherein an actuation of the active service brake device (5, 7) for the buildup of brake force, which is effected by means of the electronic control unit ECU (6), takes place when an operating element (9, 17) for the parking brake system (2) is actuated or in the presence of an equivalent actuation signal of an electronic driver assist system if the vehicle speed V ≠ 0,
**characterized by** an electromechanic activation, effected by means of the electronic control unit ECU (6), of a locking device (11) on the vehicle drive train or on at least one applied wheel brake for the frictional or positive locking of the vehicle drive train such as e.g. the transmission, differential, wheel, etc., or the wheel brake (8) after its application, if the vehicle speed amounts to V ≈ 0 and if a prevention signal for locking that is generated by the electronic control unit ECU (6) for the coordinated execution of the service or parking brake function is suppressed, the said suppression of the prevention signal being coupled to the existence of driving-situation-responsive or other vehicle-relevant criteria beside the vehicle speed V.

2. Automotive vehicle brake system as claimed in claim 1,
**characterized in that** the prevention signal for locking that is generated by the electronic control unit (6) is suppressed within the control unit (6) in dependence on the driving condition of the vehicle.

3. Automotive vehicle brake system as claimed in any one of the preceding claims,
**characterized in that** the electronic control unit (6) includes a time element which causes suppression of the prevention signal for locking of the vehicle after lapse of a predetermined time interval.

4. Automotive vehicle brake system as claimed in any one of the preceding claims,
**characterized in that** the frictional or positive locking device (11) of the vehicle drive train or at least one applied wheel brake (8) is effected automatically by means of an electronic control unit (6), that means, independently of an actuation of the parking brake system (2) by way of an operating element (9, 17), if the vehicle speed amounts to V ≈ 0.

5. Automotive vehicle brake system as claimed in any one of the preceding claims,
**characterized in that** the frictional or positive locking device (11) of the vehicle drive train or at least one applied wheel brake (8) is adapted to be actuated or released electrically.

6. Automotive vehicle brake system as claimed in any one of the preceding claims,
**characterized in that** a positive mechanic locking device (11) which is adapted to be actuated or released mechanically is provided in the drive train, in the transmission, or a differential unit.

7. Automotive vehicle brake system as claimed in any one of claims 1 to 5,
**characterized in that** a positive, mechanic locking device (11) which is adapted to be actuated or released electrically is provided on at least one vehicle wheel.

8. Automotive vehicle brake system as claimed in any one of claims 1 to 5,
**characterized in that** a mechanic locking device which locks at least one wheel brake (8) in the applied condition is integrated in the wheel brake (8), the said locking device being adapted to be actuated or released electrically.

9. Automotive vehicle brake system as claimed in any one of the preceding claims,
**characterized in that** the parking brake system (2) includes an independent second energy supply unit (16) which is separated from the usual vehicle electric system.

10. Automotive vehicle brake system as claimed in any one of the preceding claims,
**characterized in that** the parking brake system (2) includes a second, independent operating device (9, 17) for the parking brake function, the said device being separated from the operating device of the service brake system (1).

11. Automotive vehicle brake system as claimed in any one of the preceding claims,
**characterized in that** the brake system includes only one single electronic control unit ECU (6) both for the service brake system (1) and the parking brake system (2).

12. Automotive vehicle brake system as claimed in any one of the preceding claims,
**characterized in that** the service brake system (1) includes an electronic slip control system.

13. Method of controlling an automotive vehicle brake system in response to driving situations, the said system including an electrically controllable parking brake system (2) and a service brake system (1) which includes a controllable or regulatable active service brake device, e.g., a TCS-system/ESP-system, HCU (Hydraulic Control Unit), an analog/active booster, a brake-by-wire system, etc., appropriate for the buildup of independent brake force on at least one wheel brake (8) of the brake system, and with an electronic control unit ECU (6) for actuating the wheel brakes, wherein the following steps are executed:
- a determination of the current driving condition of the vehicle and processing the driving-situation-responsive data within an electronic control unit ECU (6) for generating appropriate actuation signals for the brake system in dependence on the braking request of the driver,
- an activation of the active service brake device (5, 7) for the buildup of brake force, which is effected by means of the electronic control unit ECU (6), upon actuation of an operating element (9, 17) for the parking brake function or in the presence of an equivalent actuation signal of an electronic driver assist system if the vehicle speed amounts to V ≠ 0,
- an electromechanic activation, effected by means of the electronic control unit ECU (6), of a locking device (11) on the vehicle drive train or on at least one applied wheel brake for the frictional or positive locking of the vehicle drive train such as e.g. the transmission, differential, wheel, etc., or the wheel brake (8) after its application, if the vehicle speed amounts to V ≈ 0 and if a prevention signal for locking that is generated by an electronic control unit ECU (6) is suppressed, the said suppression of the prevention signal being coupled to the existence of driving-situation-responsive or vehicle-relevant criteria beside the vehicle speed V,
- a reduction of brake force when an electromechanic activation of the locking device (11) on the vehicle drive train or on at least one applied wheel brake (8) is effected.

## Revendications

1. Dispositif de frein pour véhicule automobile comprenant un dispositif de frein de stationnement (2) à commande électrique, un dispositif de frein de service (1), qui comprend des moyens de frein de service actifs pouvant faire l'objet d'un dosage ou d'une régulation, par exemple une unité de régulateur hydraulique HCU ASR/ESP, un amplificateur analogique/actif, un dispositif frein-par-fil, etc., d'une manière appropriée pour l'établissement de pression de freinage extérieure sur au moins un frein de roue (8) du dispositif de frein, et une unité de commande électronique UCE (6) servant à commander les freins de roue (8), tandis qu'a lieu, dans le cas où la vitesse de véhicule vaut V ≠ 0, une commande, provoquée au moyen de l'unité de commande électronique UCE (6), des moyens de frein de service actifs (5, 7) servant à l'établissement de force de freinage, lors d'un actionnement d'un élément de manoeuvre (9, 17) prévu pour le dispositif de frein de stationnement (2) ou lors d'un signal de commande équivalent d'un dispositif électronique d'assistance au conducteur, caractérisé, dans le cas où la vitesse de véhicule vaut V ≈ 0 et dans le cas où il se présente une suppression d'un signal d'empêchement produit par une unité de commande électronique UCE (6) et prévu pour le verrouillage ou le blocage en vue de la réalisation coordonnée de la fonction de frein de service ou de frein de stationnement, par une activation électromécanique de moyens de verrouillage ou de blocage (11) situés sur la ligne de traction de véhicule ou sur au moins un frein de roue serré, en vue du verrouillage ou du blocage, par frottement ou par complémentarité de formes, de la ligne de traction de véhicule; par exemple boîte de vitesses, différentiel, roue, etc., ou du frein de roue (8), après serrage de celui-ci, tandis qu'une suppression du signal d'empêchement est couplée à l'existence de critères dépendant de la situation de conduite ou d'autres critères concernant le véhicule, en dehors de la vitesse de véhicule V.

2. Dispositif de frein pour véhicule automobile suivant la revendication 1, **caractérisé en ce que** la suppression du signal d'empêchement produit par l'unité de commande électronique (6) et prévu pour le verrouillage ou le blocage a lieu à l'intérieur de l'unité de commande (6) en fonction de l'état de conduite du véhicule.

3. Dispositif de frein pour véhicule automobile suivant l'une des revendications précédentes, **caractérisé en ce que** l'unité de commande électronique (6) comprend un élément à minuterie qui, une fois écoulé un intervalle de temps fixé à l'avance, provoque une suppression du signal d'empêchement prévu pour le verrouillage ou le blocage du véhicule.

4. Dispositif de frein pour véhicule automobile suivant l'une des revendications précédentes, **caractérisé en ce que** les moyens de verrouillage ou de blocage (11), par frottement ou par complémentarité de formes, de la ligne de traction de véhicule ou d'au moins un frein de roue (8) serré a lieu, dans le cas où la vitesse de véhicule vaut V ≈ 0, au moyen d'une commande électronique (6) et automatiquement, c'est-à-dire indépendamment d'un actionnement du dispositif de frein de stationnement (2) à l'aide d'un élément de manoeuvre (9, 17).

5. Dispositif de frein pour véhicule automobile suivant l'une des revendications précédentes, **caractérisé en ce que** les moyens de verrouillage ou de blocage (11), par frottement ou par complémentarité de formes, de la ligne de traction de véhicule ou d'au moins un frein de roue (8) serré peuvent être actionnés ou libérés électriquement.

6. Dispositif de frein pour véhicule automobile suivant l'une des revendications précédentes, **caractérisé en ce que** des moyens de verrouillage ou de blocage (11) mécaniques, par complémentarité de formes, sont prévus dans la ligne de traction, dans la boîte de vitesses ou une unité de différentiel, lesquels moyens peuvent être actionnés ou libérés aussi bien électriquement que mécaniquement.

7. Dispositif de frein pour véhicule automobile suivant l'une des revendications 1 à 5, **caractérisé en ce que** des moyens de verrouillage ou de blocage (11) mécanique, par complémentarité de formes, sont prévus sur au moins une roue de véhicule, lesquels moyens peuvent être actionnés ou libérés électriquement.

8. Dispositif de frein pour véhicule automobile suivant l'une des revendications 1 à 5, **caractérisé en ce que** des moyens de verrouillage mécanique, bloquant au moins un frein de roue (8) dans l'état serré, sont intégrés dans le frein de roue (8), les moyens de verrouillage pouvant être actionnés ou libérés électriquement.

9. Dispositif de frein pour véhicule automobile suivant l'une des revendications précédentes, **caractérisé en ce que** le dispositif de frein de stationnement (2) comprend une seconde unité d'alimentation en énergie (16) indépendante, séparée du réseau de bord habituel.

10. Dispositif de frein pour véhicule automobile suivant l'une des revendications précédentes, **caractérisé en ce que** le dispositif de frein de stationnement (2) comprend des seconds moyens de manoeuvre, (9, 17) indépendants, prévus pour la fonction de frein de stationnement et séparés des moyens de manoeuvre du dispositif de frein de service (1).

11. Dispositif de frein pour véhicule automobile suivant l'une des revendications précédentes, **caractérisé en ce que** le dispositif de frein ne comprend qu'une unité de commande électronique UCE (6) unique à la fois pour le dispositif de frein de service (1) et pour le dispositif de frein de stationnement (2).

12. Dispositif de frein pour véhicule automobile suivant l'une des revendications précédentes, **caractérisé en ce que** le dispositif de frein de service (1) comprend un dispositif électronique de régulation de glissement.

13. Procédé permettant de commander d'une manière dépendante de la situation de conduite un dispositif de frein pour véhicule automobile comprenant un dispositif de frein de stationnement (2) à commande électrique, un dispositif de frein de service (1), qui comprend des moyens de frein de service actifs pouvant faire l'objet d'un dosage ou d'une régulation, par exemple une unité de régulateur hydraulique HCU ASR/ESP, un amplificateur analogique/actif, un dispositif frein-par-fil, etc., d'une manière appropriée pour l'établissement de pression de freinage extérieure sur au moins un frein de roue (8) du dispositif de frein, et une unité de commande électronique UCE (6) servant à commander les freins de roue,
selon lequel les étapes suivantes sont exécutées :
- une détection de l'état de conduite actuel du véhicule et un traitement des données dépendant de la situation de conduite à l'intérieur d'une unité de commande électronique UCE (6) en vue de la production de signaux de commande appropriés prévus pour le dispositif de frein en fonction du souhait de freinage du conducteur,
- dans le cas où la vitesse de véhicule vaut V ≠ 0, une commande, provoquée au moyen de l'unité de commande électronique UCE (6), des moyens de frein de service actifs (5, 7) servant à l'établissement de force de freinage, lors d'un actionnement d'un élément de manoeuvre (9, 17) prévu pour la fonction de frein de stationnement ou lors d'un signal de commande équivalent d'un dispositif électronique d'assistance au conducteur,
- dans le cas où la vitesse de véhicule vaut V ≈ 0 et si un signal d'empêchement produit par une unité de commande électronique UCE (6) et prévu pour le verrouillage ou le blocage est supprimé, une activation électromécanique de moyens de verrouillage ou de blocage (11) situés sur la ligne de traction de véhicule ou sur au moins un frein de roue serré, en vue du verrouillage ou du blocage, par frottement ou par complémentarité de formes, de la ligne de traction de véhicule, par exemple de la boîte de vitesses, du différentiel, de la roue, etc., ou du frein de roue (8), après serrage de celui-ci, tandis qu'une suppression du signal d'empêchement est couplée à l'existence de critères dépendant de la situation de conduite ou de critères concernant le véhicule, en dehors de la vitesse de véhicule V,
- une suppression de force de freinage lorsqu'a lieu une activation électromécanique des moyens de verrouillage ou de blocage (11) sur la ligne de traction de véhicule ou sur au moins un frein de roue (8) serré.
